# EUROPEAN PATENT SPECIFICATION

(11) **EP 1 710 146 B1**
(45) Date of publication and mention of the grant of the patent: **24.08.2011**
(21) Application number: 06251940.0
(22) Date of filing: 06.04.2006
(51) Int. Cl.: B62B 1/14, B62B 5/00, A47F 10/04, B62B 3/14, B62D 51/04, B60D 1/04

(54) **Driving assembly**
Antriebsvorrichtung
Ensemble d'entraînement

(30) Priority: 06.04.2005 GB 0506943
(43) Date of publication of application: 11.10.2006
(73) Proprietor: M-Mover Holdings Limited, Derbyshire DE6 1HD (GB)
(72) Inventor: Jones, Andrew, deceased (GB)
(74) Representative: Wardley, Diana Mary

(56) References cited:
- WO-A-97/45314
- WO-A-03/014001
- AU-B2- 644 356
- JP-A- 2000 237 244
- US-A- 4 771 840
- US-A1- 2004 134 692
- US-B1- 6 260 643

## Description

### Description of Invention

The invention relates to a driving assembly and in particular, to a driving assembly adapted for driving the movement of items such as supermarket cage trolleys.

Supermarket cage trolleys generally have four ground engaging wheels, two at the front which steer and two at the rear which do not steer. They also have at least two mesh sides generally over a metre tall which give them their cage like appearance and hence their name. When fully loaded they can obviously be quite heavy. If they are moved by a single person without additional equipment, this is done by the person gripping the front of the two sides and pulling whilst walking backwards. Clearly this is by no means ideal as the person moving the cage trolley cannot see clearly where they are going, and hence accidents are not uncommon.

Various ideas have been tried to seek to improve the situation. These include tugs, which are attached to the front of the cage trolley, allowing a person to face more forwardly whilst moving the trolley.

A device for moving trolleys is described in US 4771840, the device providing a motorised cart with hand and/or foot controls for operating the cart. However, this device has no integrated mechanism to allow it to be clamped to the object being pushed, and requires the trolley to be bolted to the device with a separate U-shaped lock before use, and unlocked after use. This is inconvenient when using the device in a practical warehouse environment, and provides the possibility for separate parts to be misplaced.

A motorised cart for lifting and/or pulling heavy objects (such as a bed frame) is shown in WO 03/014001. The cart has a lifting arm with a cradle portion, the cradle being suitable for holding an elongate rod disposed horizontally to the orientation of the cart (such as a horizontal bar on a chair or bed). The cart is designed to lift, rather than tow - the cradle being actuated from below the lifting arm, and the arm not being capable of movement downward to the level at which the base of a cage trolley may be positioned. Furthermore, the cradle of the lifting arm is designed to receive a horizontal bar, and relies on a piston to operate the clamp in order to clamp the object in position, as opposed to having a formation that may be manually attached to the object, such as an upward hook, suitable to pull a cage. WO 03/014 001 discloses the features of the preamble of claim 1.

According to the present invention there is provided a driving assembly having:
first and second ground engaging wheels rotatably mounted on an axle, a body mounted on the axle,
a handle secured at a lower end thereof to the body and in use extending upwardly therefrom,
drive means mounted on the body, for providing power to the first and second ground engaging wheels,
a control module secured to the handle towards an upper end thereof, for controlling the drive means, and
a catch assembly mounted on the body,
wherein the catch assembly comprises a first catch element having an engagement formation to receive a portion of an item to be driven, and a second catch element adapted to press against the portion of the item, such that the portion of the item is clamped between the first and second catch elements, characterised in that the engagement formation of the first catch element is in the form of an upwardly open hook.

The driving assembly may be specifically adapted to drive a trolley having four ground engaging wheels, by clamping a portion of the trolley between the first and second catch elements. Clamping of the portion of the trolley provides more secure attachment between the trolley and the driving assembly. The clamping action assists in the transfer of a proportion of the weight of the trolley from two of the ground engaging wheels of the trolley to the two ground engaging wheels of the driving assembly. For example, a weight transfer of approximately 1200N can be achieved.

The first catch element may include:
a) a first connecting member rotatably mounted on the body;
b) a second connecting member fixedly attached to the first connecting member;
c) a cross member fixedly attached to and extending either side of the second connecting member, and
d) at least one catch member secured to an end of the cross member and extending forwardly from the cross member and including an engagement formation specifically adapted to engage the portion of the item to be driven.

The first catch element may include two catch members. A first catch member may be secured to a first end of the cross member and extend forwardly from the cross member and include an engagement formation specifically adapted to engage the portion of the item to be driven, and a second catch member may be secured to a second end of the cross member and extend forwardly from the cross member and include an engagement formation specifically adapted to engage the portion of the item to be driven. The first and second catch members may be joined by a strengthening strut.

The cross member of the first catch element may comprise a compliant bush. The compliant bush may provide a suspension system between the or each catch member and the wheels of the driving assembly. If the driving assembly is used on uneven ground, the compliant bush may act to absorb at least some uneven movement of the wheels, and less uneven movement is transferred to the or each catch member which helps to maintain the clamping of the portion of the item being driven.

Advantageously the or each catch member has a flat on a lower surface thereof, which enables the driving assembly to rest when not in use on the ground with the ground engaging wheels and the or each flat also on the ground and the handle approximately upright.

The second catch element may be movable between an operative position in which it presses against the portion of the item, and an inoperative position in which it does not press against the portion of the item. The second catch element may be movable between the operative and inoperative positions by activation means. The activation means may be operated by a user of the driving assembly.

The second catch element may comprise a pivot member and at least one clamp member. The pivot member may be mounted on the first catch element. The clamp member may be rotatably mounted on the pivot member. The clamp member may rotate about the pivot member to move between an operative position in which it presses against the portion of the item, and an inoperative position in which it does not press against the portion of the item. The clamp member may be caused to rotate about the pivot member by activation means. The activation means may be operated by a user of the driving assembly.

In a preferred embodiment, the second catch element comprises a pivot member, first and second clamp members and an activation member. The pivot member may be mounted on the first catch element. A first end of the first clamp member may be rotatably mounted on a first end of the pivot member, and a second end of the first clamp member may be attached to a first end of the activation member. A first end of the second clamp member may be rotatably mounted on a second end of the pivot member, and a second end of the second clamp member may be attached to a second end of the activation member. Each clamp member may rotate about the pivot member to move between an operative position in which it presses against the portion of the item, and an inoperative position in which it does not press against the portion of the item. Each clamp member may be caused to rotate about the pivot member by activation means. The activation means may act on the activation member, to rotate each clamp member about the pivot member. The activation means may comprise at least one hydraulic or pneumatic cylinder, which, when activated, presses against the activation member to move the activation member and cause rotation of each clamp member about the pivot member. The activation means may comprise a lever, which when operated causes activation of the or each cylinder. The activation means may be operated by a user of the driving assembly, for example by operating the lever of the activation means.

The body may be rotatably mounted on the axle. This allows rotation of the assembly about the axle, for engagement of the or each catch member of the first catch element with the portion of the item being driven.
The length of the handle which extends upwardly from the body may be adjustable. This allows adjustment of the overall height of the driving assembly, for ease of use by persons of differing height.

The drive means may comprise first and second motors and first and second gear mechanisms mounted on the body. The drive means may comprise a power source for the first and second motors mounted on the body. The power source may comprise a battery, for example a nickel metal hydride battery. Preferably, the battery has a life of at least 1.5 hours. The battery may be removed from the driving assembly for charging. The driving assembly may comprise integral charging means, for connecting the battery to a charging device. The drive means may provide power to the first ground engaging wheel from the first motor and the first gear mechanism. The drive means may provide power to the second ground engaging wheel from the second motor and the second gear mechanism. The control module may control the drive means to control the supply of power from the first motor and the first gear mechanism to the first wheel and from the second motor and the second gear mechanism to the second wheel.

The driving assembly may further comprise resistance measurement means, to measure the resistance of each of the first and second wheels. The resistance measurement means may pass resistance measurements of each wheel to the control module. The control module may use the resistance measurements to control the supply of power to each wheel. The control module may control the supply of power to each wheel to supply power levels to a wheel which have a direct relationship to the resistance of the wheel. In this way, different power levels can be supplied to each wheel, and if a wheel experiences more resistance, e.g. due to turning of the driving assembly, more power is supplied to this wheel. This enables easy turning of the driving assembly.
The control module may comprise operation means which when operated causes the driving assembly to move in a forwardly direction. The control module may comprise operation means which when operated causes the driving assembly to move in a rearwardly direction. The operation means may comprise, for example, a push button. The control module may comprise access means, e.g. a lock and key or a swipe card, which must be operated to allow use of the driving assembly.

An embodiment of the invention will now be described, by way of example only, with reference to the accompanying drawings, in which:
Figure 1 is a schematic perspective view of a driving assembly according to the invention;
Figure 2 is a schematic perspective view of the catch assembly of the driving assembly of Figure 1, and
Figure 3 is a schematic perspective view of part of the activation means of the driving assembly of Figure 1.

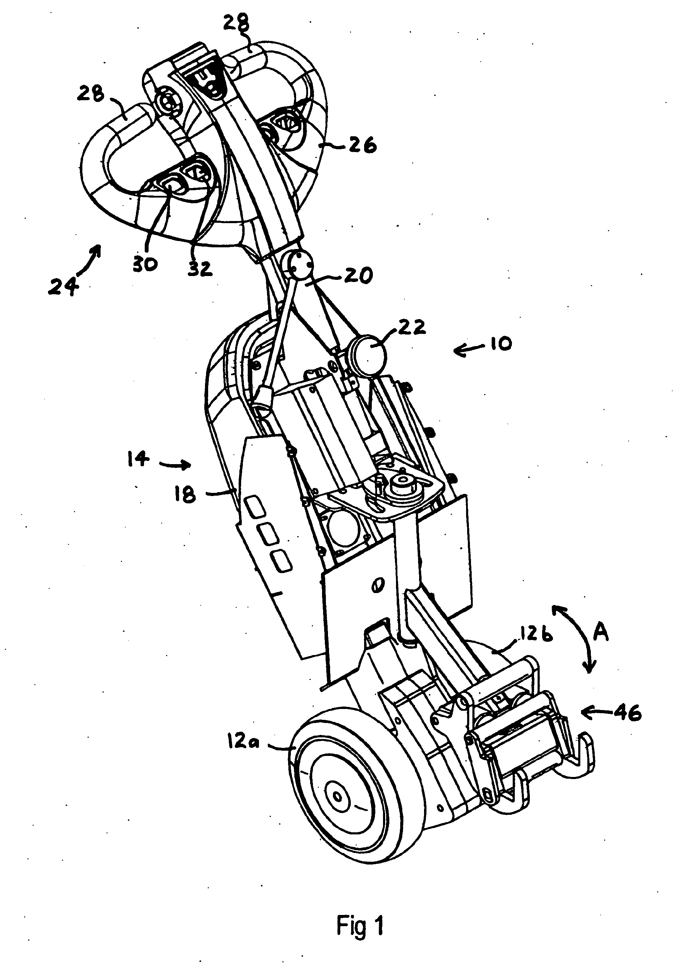

Referring to the Figure 1, a driving assembly 10 has a pair of ground engaging wheels 12a, 12b, having pneumatic tyres, rotatably mounted on an axle (not visible). A body 14 is rotatably mounted on the axle, for rotation about the axle as indicated by the arrow A. The body comprises a casing 18, and mounted within the casing are a first motor, a second motor, a first gear mechanism, and a second gear mechanism. A resistance measurement means is also mounted within the casing 18. This is attached to each of the wheels 12a, 12b. A battery is also mounted within the casing 18, and is attached to the motors to provide power therefor.

A handle 20 is attached at a first end to the body 14, and extends upwardly from the body. The length of the handle extending upwardly from the body 14 is adjustable by means of a knob 22 attached to a threaded block secured to the body. Rotation of the knob 22 in a clockwise direction will increase the length of the handle extending from the body. Rotation of the knob 22 in an anti clockwise direction will decrease the length of the handle extending from the body. Thus the overall height of the driving assembly may be adjusted for ease of use by persons of differing heights.

A control module 24 is attached to a second end of the handle. The control module comprises a housing 26, which provides two grip portions 28 and operation means in the form of a push button 30 for forward movement of the driving assembly, and a push button 32 for reverse movement of the driving assembly. The housing is further provided with access means in the form of a lock and key mechanism (not shown), which allows use of the driving assembly.

The control module housing contains control electronics, which are connected via wiring passing through the handle 20 to each of the motors, each of the gear mechanisms, and the resistance measurement means. The control electronics are also connected to the forward and reverse push buttons 30, 32, and the lock and key mechanism.

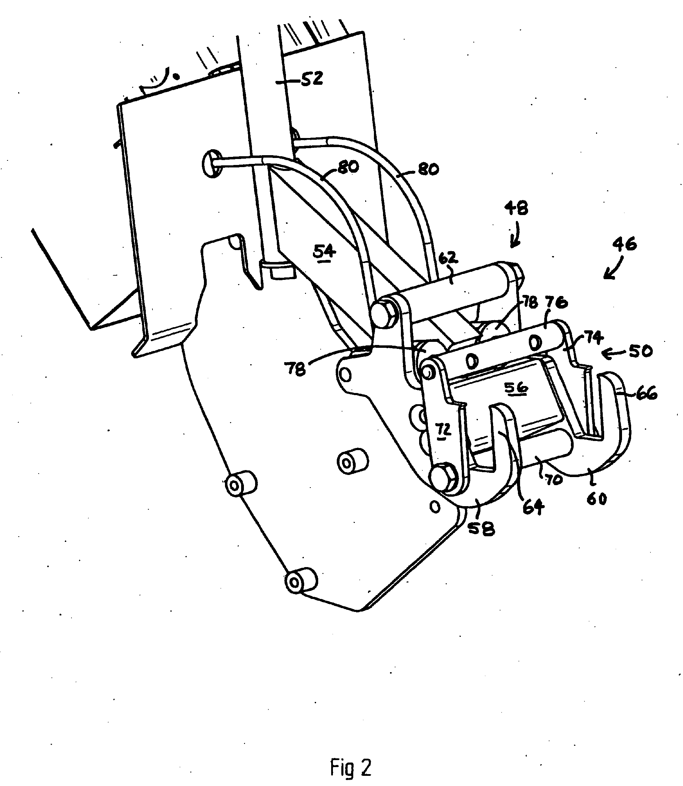

The driving assembly 10 further comprises a catch assembly 46, see Figure 2. This comprises a first catch element 48 and a second catch element 50. The first catch element 48 comprises a first connecting member 52, a second connecting member 54, a cross member 56, a first catch member 58, a second catch member 60, and a strengthening strut 62. A first end of the second connecting member 54 is secured, at an angle, to the first connecting member 52, as shown. The cross member 56, which comprises a compliant bush, is secured to a second end of the second connecting member 54, and extends to either side of the second connecting member 54. A first end of the first catch member 58 is attached to a first end of the cross member 56, and a first end of the second catch member 60 is attached to a second end of the cross member 56. A second end of the first catch member 58 is attached to a first end of the strut 62, and a second end of the second catch member 60 is attached to a second end of the strut 62. Each catch member 58, 60 extends forwardly from the cross member 56, and includes an engagement formation, 64, 66 respectively, specifically adapted for engagement with a part of the item to be driven by the assembly. In this case the driving assembly 10 is for driving a cage trolley of the kind used in supermarkets, and the engagement formations are specifically adapted to engage with a frame member of a cage trolley as used by a particular supermarket chain, and take the form of upwardly open hooks. The form of the engagement formations will vary as necessary, for securement with a portion of the particular item to be driven by the driving assembly.

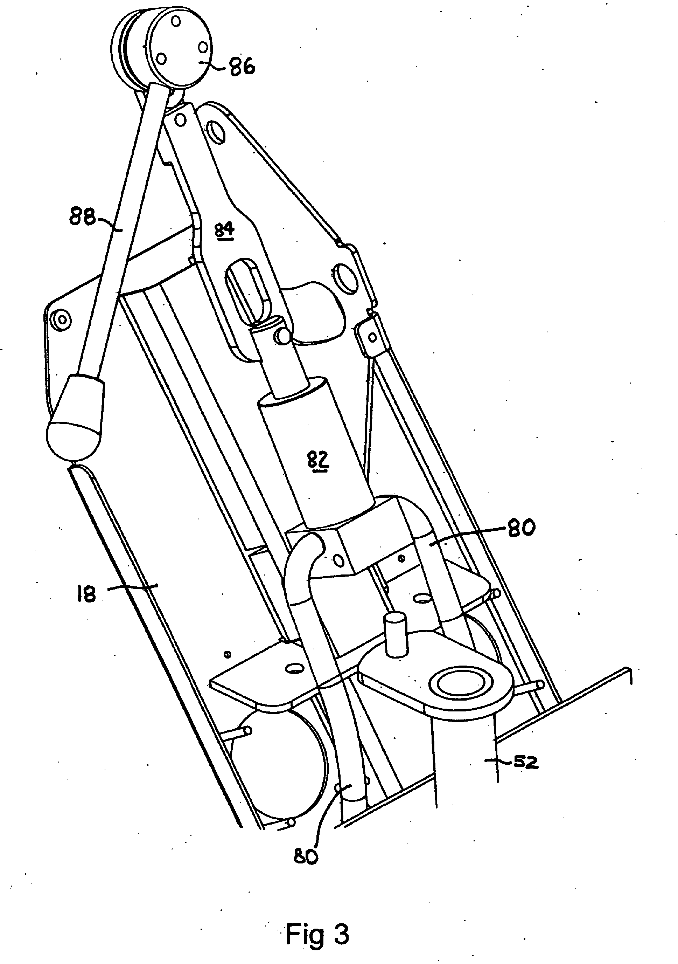

The second catch element 50 comprises a pivot member 70, a first clamp member 72, a second clamp member 74 and an activation member 76. The pivot member 70 is mounted on the first catch element, between the first and second catch members 58, 60 thereof. A first end of the first clamp member 72 is rotatably mounted on a first end of the pivot member 70, and a second end of the first clamp member 72 is attached to a first end of the activation member 76, as shown. A first end of the second clamp member 74 is rotatably mounted on a second end of the pivot member 70, and a second end of the second clamp member 74 is attached to a second end of the activation member 76, as shown. Each clamp member 72, 74 rotates about the pivot member 70 to move between an operative position in which it presses against the portion of the item being driven, and an inoperative position in which it does not press against the portion of the item. Each clamp member 72, 74 is caused to rotate about the pivot member 70 by activation means. The activation means comprises two cylinders 78, each attached via a pipe 80 to an actuating cylinder 82, see Figure 3. The cylinders 78, 82 and the pipes 80 form a hydraulic system. The actuating cylinder 82 is actuated by a lever 84, which is attached via a cam 86 to a handle 88. When the handle 88 is operated this causes operation of the lever 84, which in turn causes activation of the activating cylinder 82, which in turn causes actuation of the cylinders 78, which press against the actuation member 76, causing it to move which causes rotation of each clamp member 72, 74 about the pivot member 70.

A first end of the first connecting member 52 of the first catch element 48 is rotatably mounted on the body 14, via a fixing formation secured to the body, and a pivot bolt which fastens the first connecting member to the fixing formation, so that they can rotate with respect to each other. Thus the first and second catch elements 48, 50 can rotate about the body 14.

The operation of the driving assembly 10 will now be described in relation to driving a cage trolley of the kind used in supermarkets which has a base frame and four wheels, a steering pair at the front of the trolley and another steering pair at the rear of the trolley. A user inserts a key in the lock and key mechanism provided on the housing 26 of the control module 24, thus allowing operation of the driving assembly 10. The user grips the grip portions 28 and operates the forward and reverse push buttons 30, 32 as appropriate, to take the driving assembly 10 to the side of the cage trolley to be driven on which the portion thereof to which the engagement formations 64, 66 of the first catch element 48 are located. In this case, the driving assembly 10 is taken to the front of the cage trolley where a front member of the base frame is the portion with which the engagement formations 64, 66 of the catch members 58, 60 are adapted to engage.

The grip portions 28 of the control module 24 are then raised up, thus lowering the front of the catch members 58, 60 of the first catch element 48, so that as the driving assembly 10 is moved forwards they can pass under the front member of the base frame of the trolley. The handle 20 is then lowered back down again such that the front member of the base frame of the trolley is received in the engagement formations 64, 66 of the catch members 58, 60.

The user then rotates the handle 88 of the activation means towards the control module 24. Rotation of the handle 88 operates the lever 84, via the cam 86. This causes movement of the lever 84 towards the actuating cylinder 82, which compresses the hydraulic in this cylinder. This pressure is transmitted via the pipes 80, which contain hydraulic fluid, into the cylinders 78, which activates these cylinders causing them to press against the activation member 76 of the second catch element 50. This causes forward movement of the actuation member 76, which in turn causes rotation of each of the clamp members 72, 74 about the pivot member 70, until the clamp members 72, 74 press against the front member of the base frame of the trolley. The front member of the trolley base is thus clamped between the catch members 64, 66 of the first catch element 48 and the clamp members 72, 74 of the second catch element 50. At least a portion of the weight which was taken on the front steering wheels of the cage trolley is transferred to the ground engaging wheels 12a, 12b of the driving assembly 10.

The user then operates the forward and reverse push buttons 30, 32 provided on the control module 24, to move the driving assembly 10 and thus the cage trolley to a desired location. Power from the battery is supplied to the first wheel 12a from the first motor and the first gear mechanism, and to the second wheel 12b from the second motor and the second gear mechanism. Supply of the power to the wheels is controlled by the control module 24, using measurements of resistance of each wheel received from the resistance measurement means. If the resistance of one of the wheels is greater than that of the other, for example when it is desired to turn the driving assembly/trolley, more power is supplied to that wheel. Thus the driving assembly can be used to easily manoeuvre the trolley.

The catch assembly 46 of the driving assembly 10 is able to rotate around the body 14, and the driving assembly 10 can be pulled or pushed to one side or the other of its original position (i.e. perpendicular to the front member of the trolley), in order to steer the combination of the driving assembly 10 and the trolley. A single user can thus, using the driving assembly 10, move a full cage trolley, or indeed a nested line of such trolleys when empty, whilst walking forwards with full view of where they are going. The driving assembly 10 therefore provides both easy and safe manoeuvring of a cage trolley.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following dependent claims, or the accompanying drawings, expressed in their specific forms or in terms of a means for performing the disclosed function, or a method or process for attaining the disclosed result, as appropriate, may, separately, or in any combination of such features, be utilised for realising the invention as claimed in claim 1 in diverse forms thereof.

## Claims

1. A driving assembly (10) having:
first (12a) and second (12b) ground engaging wheels rotatably mounted on an axle,
a body (14) mounted on the axle,
a handle (20) secured at a lower end thereof to the body (14) and in use extending upwardly therefrom,
drive means mounted on the body, for providing power to the first (12a) and second (12b) ground engaging wheels,
a control module (24) secured to the handle towards an upper end thereof, for controlling the drive means, and
a catch assembly (46) mounted on the body,
wherein the catch assembly (46) comprises a first catch element (48) having an engagement formation to receive a portion of an item to be driven, and a second catch element (50) adapted to press against the portion of the item, such that the portion of the item is clamped between the first (48) and second (50) catch elements, **characterised in that** the engagement formation of the first catch element (48) is in the form of an upwardly open hook.

2. A driving assembly according to claim 1 in which the first catch element (48) includes:
a) a first connecting member (52) rotatably mounted on the body (14);
b) a second connecting member (54) fixedly attached to the first connecting member (52);
c) a cross member (56) fixedly attached to and extending either side of the second connecting member (54), and
d) at least one catch member (58,60) secured to an end of the cross member (56) and extending forwardly from the cross member (56) and including the engagement formation specifically adapted to engage the portion of the item to be driven.

3. A driving assembly according to claim 2 in which the first catch element (48) comprises a first catch member (58) secured to a first end of the cross member (56) and a second catch member (60) secured to a second end of the cross member (56) .

4. A driving assembly according to any preceding claim in which the second catch element (50) is movable by activation means between an operative position in which it presses against the portion of the item, and an inoperative position in which it does not press against the portion of the item.

5. A driving assembly according to any preceding claim in which the second catch element (50) comprises a pivot member (70) and at least one clamp member which is rotatably mounted on the pivot member (70), and rotates about the pivot member (70) to move between an operative position in which it presses against the portion of the item, and an inoperative position in which it does not press against the portion of the item, wherein the clamp member is caused to rotate about the pivot member by activation means.

6. A driving assembly according to any one of claims 1 to 4, in which the second catch element (50) comprises a pivot member (70), first (72) and second (74) clamp members and an activation member (76) in which a first end of the first clamp member (72) is rotatably mounted on a first end of the pivot member (70), and a second end of the first clamp member (72) is attached to a first end of the activation member (76), and a first end of the second clamp member (74) is rotatably mounted on a second end of the pivot member (70), and a second end of the second clamp member (74) is attached to a second end of the activation member (76), and in which each clamp member rotates about the pivot member (70) to move between an operative position in which it presses against the portion of the item, and an inoperative position in which it does not press against the portion of the item.

7. A driving assembly according to claim 6 in which each clamp member is caused to rotate about the pivot member (70) by activation means which acts on the activation member (76) to rotate each clamp member about the pivot member (70), wherein the activation means comprises at least one hydraulic or pneumatic cylinder (78), which, when activated, presses against the activation member (76) to move the activation member (76) and cause rotation of each clamp member about the pivot member (70).

8. A driving assembly according to claim 7 in which the activation means comprises a lever (84), which when operated causes activation of the or each cylinder (78).

9. A driving assembly according to any preceding claim in which the body (14) is rotatably mounted on the axle.

10. A driving assembly according to any preceding claim in which the drive means comprises first and second motors, first and second gear mechanisms and a power source, wherein the drive means provides power to the first ground engaging wheel (12a) from the first motor and the first gear mechanism, and
to the second ground engaging wheel (12b) from the second motor and the second gear mechanism.

11. A driving assembly according to claim 10 in which the control module (24) controls the drive means to control the supply of power from the first motor and the first gear mechanism to the first wheel (12a) and from the second motor and the second gear mechanism to the second wheel (12b).

12. A driving assembly according to any preceding claim which comprises resistance measurement means, to measure the resistance of each of the first (12a) and second (12b) wheels and pass resistance measurements of each wheel to the control module (24), wherein the control module (24) uses the resistance measurements to control the supply of power to each wheel.

13. A driving assembly according to claim 12 in which the control module (24) controls the supply of power to each wheel to supply power levels to a wheel which have a direct relationship to the resistance of the wheel.

## Patentansprüche

1. Antriebsvorrichtung (10) mit:
einem ersten (12a) und einem zweiten (12b) in den Boden eingreifenden Rad, die drehbar an einer Achse montiert sind,
einer an der Achse montierten Karosserie (14),
einem Handgriff (20), der an seinem unteren Ende an der Karosserie (14) gesichert ist und sich im Gebrauch davon nach oben erstreckt,
einer an der Karosserie montierten Antriebseinrichtung zum Liefern von Leistung an das erste (12a) und zweite (12b) in den Boden eingreifende Rad,
einem Steuermodul (24), das an dem Handgriff in Richtung seines oberen Endes zum Steuern der Antriebseinrichtung gesichert ist, und
einer an der Karosserie montierten Arretieranordnung (46),
wobei die Arretieranordnung (46) ein erstes Arretierelement (48) mit einer Eingriffsformation zum Aufnehmen eines Abschnitts eines anzutreibenden Objekts und ein zweites Arretierelement (50) umfasst, das dazu ausgelegt ist, gegen den Abschnitt des Objekts so zu drücken, dass der Abschnitt des Objekts zwischen dem ersten (48) und dem zweiten (50) Arretierelement eingeklemmt ist, **dadurch gekennzeichnet, dass** die Eingriffsformation des ersten Arretierelements (48) in Form eines nach oben offenen Hakens vorliegt.

2. Antriebsvorrichtung nach Anspruch 1, wobei das erste Arretierelement (48) Folgendes einschließt:
a) ein erstes Verbindungselement (52), das drehbar an der Karosserie (14) montiert ist;
b) ein zweites Verbindungselement (54), das fest an dem ersten Verbindungselement (52) angebracht ist;
c) eine Traverse (56), die fest an dem zweiten Verbindungselement (54) angebracht ist und sich auf beiden Seiten desselben erstreckt, und
d) mindestens ein Arretierelement (58, 60), das an einem Ende der Traverse (56) gesichert ist und sich von der Traverse (56) nach vorne erstreckt und die Eingriffsformation einschließt, die speziell dazu ausgelegt ist, in den Abschnitt des anzutreibenden Objekts einzugreifen.

3. Antriebsvorrichtung nach Anspruch 2, wobei das erste Arretierelement (48) eine erste Arretiervorrichtung (58) umfasst, die an einem ersten Ende der Traverse (56) gesichert ist, und eine zweite Arretiervorrichtung (60), die an einem zweiten Ende der Traverse (56) gesichert ist.

4. Antriebsvorrichtung nach irgendeinem vorhergehenden Anspruch, wobei das zweite Arretierelement (50) durch eine Aktivierungseinrichtung zwischen einer Betriebsposition, in der es gegen den Abschnitt des Objekts drückt, und einer Nichtbetriebsposition, in der es nicht gegen den Abschnitt des Objekts drückt, bewegbar ist.

5. Antriebsvorrichtung nach irgendeinem vorhergehenden Anspruch, wobei das zweite Arretierelement (50) ein Schwenkelement (70) und zumindest ein Klemmelement umfasst, das an dem Schwenkelement (70) drehbar montiert ist und sich um das Schwenkelement (70) dreht, um sich zwischen einer Betriebsposition, in der es gegen den Abschnitt des Objekts drückt, und einer Nichtbetriebsposition, in der es nicht gegen den Abschnitt des Objekts drückt, zu bewegen, wobei das Klemmelement durch die Aktivierungseinrichtung veranlasst wird, sich um das Schwenkelement zu drehen.

6. Antriebsvorrichtung nach irgendeinem der Ansprüche 1 bis 4, wobei das zweite Arretierungselement (50) ein Schwenkelement (70), ein erstes (72) und ein zweites (74) Klemmelement und ein Aktivierungselement (76) umfasst, wobei ein erstes Ende des ersten Klemmelements (72) drehbar an einem ersten Ende des Schwenkelements (70) montiert ist und ein zweites Ende des ersten Klemmelements (72) an einem ersten Ende des Aktivierungselements (76) angebracht ist und ein erstes Ende des zweiten Klemmelements (74) drehbar an einem zweiten Ende des Schwenkelements (70) montiert ist und ein zweites Ende des zweiten Klemmelements (74) an einem zweiten Ende des Aktivierungselements (76) angebracht ist, und wobei sich jedes Klemmelement um das Schwenkelement (70) dreht, um sich zwischen einer Betriebsposition, in der es gegen den Abschnitt des Objekts drückt, und einer Nichtbetriebsposition, in der es nicht gegen den Abschnitt des Objekts drückt, zu bewegen.

7. Antriebsvorrichtung nach Anspruch 6, wobei jedes Klemmelement durch eine Aktivierungseinrichtung veranlasst wird, sich um das Schwenkelement (70) zu drehen, welche Aktivierungseinrichtung auf das Aktivierungselement (76) wirkt, um jedes Klemmelement um das Schwenkelement (70) zu drehen, wobei die Aktivierungseinrichtung zumindest einen hydraulischen oder pneumatischen Zylinder (78) umfasst, der, wenn er aktiviert wird, gegen das Aktivierungselement (76) drückt, um das Aktivierungselement (76) zu bewegen und eine Drehung jedes Klemmelements um das Schwenkelement (70) zu bewirken.

8. Antriebsvorrichtung nach Anspruch 7, wobei die Aktivierungseinrichtung einen Hebel (84) umfasst, der, wenn er betätigt wird, die Aktivierung des oder jedes Zylinders (78) bewirkt.

9. Antriebsvorrichtung nach irgendeinem vorhergehenden Anspruch, wobei die Karosserie (14) drehbar auf der Achse montiert ist.

10. Antriebsvorrichtung nach irgendeinem vorhergehenden Anspruch, wobei die Antriebseinrichtung einen ersten und zweiten Motor, einen ersten und zweiten Getriebemechanismus und eine Leistungsquelle umfasst, wobei die Antriebseinrichtung dem ersten in den Boden eingreifenden Rad (12a) Leistung von dem ersten Motor und dem ersten Getriebemechanismus zuführt und dem zweiten in den Boden eingreifenden Rad (12b) von dem zweiten Motor und dem zweiten Getriebemechanismus Leistung zuführt.

11. Antriebsvorrichtung nach Anspruch 10, wobei das Steuermodul (24) die Antriebseinrichtung steuert, um die Leistungszufuhr vom ersten Motor und dem ersten Getriebemechanismus zum ersten Rad (12a) und vom zweiten Motor und dem zweiten Getriebemechanismus zum zweiten Rad (12b) zu steuern.

12. Antriebsvorrichtung nach irgendeinem vorhergehenden Anspruch, die Widerstandsmesseinrichtungen zum Messen des Widerstands von jedem des ersten (12a) und zweiten (12b) Rads zu messen und Widerstandsmessungen jedes Rads an das Steuermodul (24) weiterzuleiten, wobei das Steuermodul (24) die Widerstandsmessungen verwendet, um die Leistungszufuhr zu jedem Rad zu steuern.

13. Antriebsvorrichtung nach Anspruch 12, wobei das Steuermodul (24) die Leistungszufuhr zu jedem Rad steuert, um einem Rad Leistungspegel zuzuführen, die eine direkte Beziehung zum Widerstand des Rads aufweisen.

## Revendications

1. Un ensemble d'entraînement (10) comportant :
une première (12a) et une deuxième (12b) roues en prise avec le sol, montées de manière rotative sur un essieu,
un corps (14) monté sur l'essieu,
une poignée (20) fixée à son extrémité inférieure au corps (14) et partant vers le haut pendant l'utilisation,
un dispositif d'entraînement monté sur le corps, pour entraîner les première (12a) et deuxième (12b) roues en prise avec le sol,
un module de commande (24) fixé à la poignée vers son extrémité supérieure, pour commander le dispositif d'entraînement, et
un ensemble d'encliquetage (46) monté sur le corps,
dans lequel l'ensemble d'encliquetage (46) comporte un premier élément d'encliquetage (48) ayant une formation à emboîtement destinée à recevoir une partie d'un objet à entraîner, et un deuxième élément d'encliquetage (50) adapté pour faire pression contre la partie de l'objet, afin que la partie de l'objet soit serrée entre les premier (48) et deuxième (50) éléments d'encliquetage, **se caractérisant par le fait que** la formation à emboîtement du premier élément d'encliquetage (48) se présente sous la forme d'un crochet ouvert vers le haut.

2. Un ensemble d'entraînement selon la revendication 1, dans lequel le premier élément d'encliquetage (48) comprend ce qui suit :
a) un premier membre de connexion (52) monté de manière rotative sur le corps (14) ;
b) un deuxième membre de connexion (54) fixé de manière fixe au premier membre de connexion (52) ;
c) un membre transversal (56) fixé de manière fixe au deuxième membre de connexion (54) et en dépassant de chaque côté ; et
d) au moins un membre d'encliquetage (58, 60) fixé à une extrémité du membre transversal (56) et dépassant vers l'avant du membre transversal (56) et comprenant la formation d'emboîtement spécifiquement adaptée pour s'emboîter avec la partie de l'objet à entraîner.

3. Un ensemble d'entraînement selon la revendication 2, dans lequel le premier élément d'encliquetage (48) comprend un premier membre d'encliquetage (58) fixé à une première extrémité du membre transversal (56) et un deuxième membre d'encliquetage (60) fixé à une deuxième extrémité du membre transversal (56).

4. Un ensemble d'entraînement selon n'importe laquelle des revendications précédentes, dans lequel le deuxième élément d'encliquetage (50) peut, grâce à un dispositif d'activation, alterner entre une position de fonctionnement dans laquelle il fait pression sur la partie de l'objet et une position de non-fonctionnement dans laquelle il ne fait pas pression sur la partie de l'objet.

5. Un ensemble d'entraînement selon n'importe laquelle des revendications précédentes, dans lequel le deuxième élément d'encliquetage (50) comprend un membre pivot (70) et au moins un membre de serrage monté de manière rotative sur le membre pivot (70) et tourne sur le membre pivot (70) pour alterner entre une position de fonctionnement dans laquelle il fait pression sur la partie de l'objet et une position de non-fonctionnement dans laquelle il ne fait pas pression sur la partie de l'objet, dans lequel le dispositif d'activation amène le membre de serrage à tourner sur le membre pivot.

6. Un ensemble d'entraînement selon n'importe laquelle des revendications 1 à 4, dans lequel le deuxième élément d'encliquetage (50) comprend un membre pivot (70), un premier (72) et un deuxième (74) membres de serrage et un membre d'activation (76), dans lequel une première extrémité du premier membre de serrage (72) est montée de manière rotative sur une première extrémité du membre pivot (70) et une deuxième extrémité du premier membre de serrage (72) est fixée à la première extrémité du membre d'activation (76) et une première extrémité du deuxième membre de serrage (74) est montée de manière rotative sur une deuxième extrémité du membre pivot (70) et une deuxième extrémité du deuxième membre de serrage (74) est fixée à une deuxième extrémité du membre d'activation (76), et dans lequel chaque membre de serrage tourne sur le membre pivot (70) de façon à alterner entre une position de fonctionnement dans laquelle il fait pression sur la partie de l'objet et une position de non-fonctionnement dans laquelle il ne fait pas pression sur la partie de l'objet.

7. Un ensemble d'entraînement selon la revendication 6, dans lequel le dispositif d'activation amène chaque membre de serrage à tourner sur le membre pivot (70), le dispositif d'activation agissant sur le membre d'activation (76) pour faire tourner chaque membre de serrage sur le membre pivot (70), dans lequel le dispositif d'activation comporte au moins un cylindre hydraulique ou pneumatique (78) qui, lorsqu'il est activé, fait pression sur le membre d'activation (76) afin d'actionner le membre d'activation (76) et de déclencher la rotation de chaque membre de serrage sur le membre pivot (70).

8. Un ensemble d'entraînement selon la revendication 7, dans lequel le dispositif d'activation comporte un levier (84) qui, lorsqu'il est actionné, entraîne l'activation du ou des cylindres (78).

9. Un ensemble d'entraînement selon n'importe laquelle des revendications précédentes, dans lequel le corps (14) est monté de manière rotative sur l'essieu.

10. Un ensemble d'entraînement selon n'importe laquelle des revendications précédentes, dans lequel le dispositif d'entraînement comprend un premier et un deuxième moteurs, un premier et un deuxième mécanismes d'engrenage et une source d'alimentation, dans lequel le dispositif d'entraînement entraîne la première roue en prise avec le sol (12a) à partir du premier moteur et du premier mécanisme d'engrenage, et la deuxième roue en prise avec le sol (12b) à partir du deuxième moteur et du deuxième mécanisme d'engrenage.

11. Un ensemble d'entraînement selon la revendication 10, dans lequel le module de commande (24) contrôle le dispositif d'entraînement de façon à contrôler la puissance transmise par le premier moteur et le premier mécanisme d'engrenage à la première roue (12a) et la puissance transmise par le deuxième moteur et le deuxième mécanisme d'engrenage à la deuxième roue (12b).

12. Un ensemble d'entraînement selon n'importe laquelle des revendications précédentes, qui comporte un dispositif de mesure de la résistance, afin de mesurer la résistance des première (12a) et deuxième (12b) roues et de transmettre les mesures de résistance de chaque roue au module de commande (24), dans lequel le module de commande (24) utilise les mesures de résistance pour contrôler la puissance transmise à chaque roue.

13. Un ensemble d'entraînement selon la revendication 12, dans lequel le module de commande (24) contrôle la puissance transmise à chaque roue, afin que la puissance parvenant à chaque roue soit en rapport direct avec la résistance de la roue.
